# EUROPÄISCHE PATENTSCHRIFT

(11) **EP 3 357 314 B1**
(45) Veröffentlichungstag und Bekanntmachung des Hinweises auf die Patenterteilung: **24.02.2021**
(21) Anmeldenummer: 18401009.8
(22) Anmeldetag: 30.01.2018
(51) Int. Cl.: A01B 59/00, A01B 59/06, A01B 51/04, A01M 7/00

(54) **LANDWIRTSCHAFTLICHES ARBEITSGERÄT MIT EINER KUPPLUNGSVORRICHTUNG**
AGRICULTURAL WORKING DEVICE WITH A COUPLING DEVICE
APPAREIL DE TRAVAIL AGRICOLE AVEC UN DISPOSITIF D'ACCOUPLEMENT

(30) Priorität: 01.02.2017 DE 102017101920
(43) Veröffentlichungstag der Anmeldung: 08.08.2018
(73) Patentinhaber: Amazonen-Werke H. Dreyer GmbH & Co. KG, 49205 Hasbergen (DE)
(72) Erfinder: Schiermann, Stefan, 48432 Rheine (DE); Holtkötter, Christian, 33775 Versmold (DE)

(56) Entgegenhaltungen:
- EP-A1- 2 260 687
- EP-A2- 2 918 156
- ES-A1- 2 557 058

## Beschreibung

Die Erfindung betrifft ein landwirtschaftliches Arbeitsgerät mit einer Kupplungsvorrichtung nach dem Oberbegriff des Patentanspruchs 1.

Gattungsgemäße Kupplungsvorrichtungen weisen üblicherweise ein Koppelelement auf, welches dazu eingerichtet ist, mit einem Oberlenker einer Dreipunkt-Kupplung einer Zugmaschine gekoppelt zu werden. Bekannt sind beispielsweise Kupplungsvorrichtungen, deren Koppelelement als Bolzen ausgebildet ist, wobei die Kopplung des Oberlenkers mit dem Bolzen mittels eines am Oberlenker befestigten Fanghakens erfolgt.

In der Druckschrift AT 255 179 B wird außerdem eine Kupplungsvorrichtung beschrieben, bei welcher das Koppelelement als Kugelbolzen ausgebildet ist, wobei die Dreipunkt-Kupplung der Zugmaschine eine Kugelpfanne aufweist, welche mit dem Kugelbolzen in Eingriff bringbar ist.

Bei der Kopplung von landwirtschaftlichen Arbeitsgeräten mit einer Zugmaschine besteht häufig die Notwendigkeit, elektrische und/oder hydraulische Versorgungsleitungen an das landwirtschaftliche Arbeitsgerät anzuschließen. Für die zum Anschließen der Versorgungsleitungen notwendigen Anschlussarbeiten steht dem Maschinenbediener regelmäßig nur der eingeschränkte Raum zwischen der Zugmaschine und dem landwirtschaftlichen Arbeitsgerät zur Verfügung.

Um dem Maschinenbediener einen größeren Raum zum Ausführen der Anschlussarbeiten zur Verfügung zu stellen, wurden Kupplungsvorrichtungen entwickelt, bei welchen das Koppelelement zwischen einer Kuppelposition und einer Arbeitsposition bewegbar ist. In der Kuppelposition steht dem Maschinenbediener mehr Raum zwischen der Zugmaschine und dem landwirtschaftlichen Arbeitsgerät zur Verfügung als in der Arbeitsposition, sodass die notwendigen Anschlussarbeiten mit geringerem Aufwand durchgeführt werden können. Nach dem Abschluss der Anschlussarbeiten kann der Abstand zwischen der Zugmaschine und dem landwirtschaftlichen Arbeitsgerät dann verringert werden, wodurch das Koppelelement in die Arbeitsposition bewegt wird.

Üblicherweise weisen entsprechende Kupplungsvorrichtungen ein Verriegelungssystem auf, welches das Koppelelement in der Arbeitsposition belastbar arretiert. Die Druckschrift DE 1 457 680 A1 schlägt hierzu vor, den geräteseitigen oberen Kupplungspunkt als Verriegelung mit einem Schwenkhebel und einem abgefederten Riegel auszubilden.

Aus der Druckschrift EP 2 260 687 B1 ist darüber hinaus eine Kupplungsvorrichtung bekannt, bei welcher zum Abschließen des Arretierungsvorgangs das landwirtschaftliche Arbeitsgerät relativ zu der Zugmaschine bewegt, nämlich angehoben werden muss.

Ein landwirtschaftliches Arbeitsgerät mit einer Abstellvorrichtung, welche Abstellstützen aufweist, und einer Kupplungsvorrichtung, deren Sicherheitseinrichtung unabhängig von einer Bewegung des landwirtschaftlichen Arbeitsgeräts verbringbar ist, ist in EP 2 260 687 A1 und ES 2 557 058 A1 offenbart.

Die EP 2 918 156 A2 offenbart ebenfalls ein Arbeitsgerät mit einer Abstellstützen aufweisenden Abstellvorrichtung.

Diese und andere bekannte Lösungen zur Arretierung eines beweglichen Koppelelements haben jedoch den Nachteil, dass Sie entweder eine Relativbewegung des landwirtschaftlichen Arbeitsgeräts und der Zugmaschine zum Abschließen des Kupplungsvorgangs voraussetzen und/oder eine aufwändig zu bedienende Verriegelungsmechanik aufweisen.

Die der Erfindung zugrunde liegende Aufgabe besteht somit darin, den Kupplungsvorgang eines landwirtschaftlichen Arbeitsgeräts, welches über ein bewegliches Koppelelement verfügt, mit einer Zugmaschine zu vereinfachen.

Die Aufgabe wird gelöst durch ein landwirtschaftliches Arbeitsgerät mit den Merkmalen des unabhängigen Anspruchs 1.

Es ist vorgesehen, dass die Sicherungseinrichtung, welche in einer Sicherungsposition gemeinsam mit einer in einer Verriegelungsposition befindlichen Verriegelungseinrichtung das Koppelelement in der Arbeitsposition belastbar arretiert, unabhängig von einer Bewegung des landwirtschaftlichen Arbeitsgeräts von einer Passivposition in die Sicherungsposition verbringbar ist. Unter einer belastbaren Arretierung ist im Sinne der Erfindung eine Arretierung zu verstehen, welche für den ordnungsgemäßen Betrieb des landwirtschaftlichen Arbeitsgeräts, an welchem die Kupplungsvorrichtung befestigt ist, geeignet und bestimmt ist. Insbesondere kann die belastbare Arretierung nicht durch Kräfte gelöst oder gelockert werden, welche während des Betriebs des landwirtschaftlichen Arbeitsgeräts üblicherweise auftreten.

Die Erfindung macht sich die Erkenntnis zunutze, dass die fehlende Notwendigkeit einer Bewegung des landwirtschaftlichen Arbeitsgeräts zum Abschließen des Arretiervorgangs das Ankuppeln des landwirtschaftlichen Arbeitsgeräts wesentlich vereinfacht. Insbesondere ist es nicht notwendig, das landwirtschaftliche Arbeitsgerät anzuheben, um den Arretiervorgang abzuschließen. Grundsätzlich ist es jedoch vorstellbar, dass das landwirtschaftliche Arbeitsgerät während des Arretiervorgangs trotzdem angehoben wird, beispielsweise um das landwirtschaftliche Arbeitsgerät in eine Betriebsposition zu verbringen. Die erfindungsgemäße Kupplungsvorrichtung erfordert diese Bewegung des landwirtschaftlichen Arbeitsgerätes aber nicht zwingend zum Abschließen des Arretiervorgangs.

Vorzugsweise ist das Koppelelement schwenkbar an einem oder mehreren Schwenkhebeln angelenkt. Insbesondere erstreckt sich ein Schwenkhebelpaar von dem Koppelelement nach oben, wobei das Schwenkhebelpaar oberhalb des Koppelelements über eine Verbindungswelle an einem weiteren Schwenkhebel angelenkt ist. Der weitere Schwenkhebel erstreckt sich von der Verbindungswelle nach unten und ist unterhalb des Koppelelements an dem Maschinenrahmen des landwirtschaftlichen Arbeitsgeräts angelenkt. Insbesondere ist das Koppelelement in der Kuppelposition frei beweglich beziehungsweise nicht festgestellt, sodass es aus der Kuppelposition ausgelenkt werden kann. Das Koppelelement umfasst den oberen Koppelpunkt der Dreipunkt-Kupplung, wobei die Dreipunkt-Kupplung ein Dreipunkt-Kraftheber sein kann. Beispielsweise ist das Koppelelement als Bolzen ausgebildet, sodass ein an dem Oberlenker der Dreipunkt-Kupplung befestigter Fanghaken mit dem Koppelelement in Eingriff bringbar ist. Die Kupplungsvorrichtung umfasst vorzugsweise zusätzlich zwei untere Koppeleinrichtungen, welche unterhalb des Koppelelements angeordnet sind. Die zwei unteren Koppeleinrichtungen umfassen vorzugsweise die unteren Koppelpunkte der Dreipunkt-Kupplung.

In einer bevorzugten Ausführungsform der erfindungsgemäßen Kupplungsvorrichtung ist die Sicherungseinrichtung manuell von der Passivposition in die Sicherungsposition verbringbar. Dadurch, dass die Sicherungseinrichtung manuell von der Passivposition in die Sicherungsposition verbringbar ist, kann die abschließende Arretierung des Koppelelements durch den Maschinenbediener selbst vorgenommen werden. Im Gegensatz zu automatisch verriegelnden Verriegelungssystemen wird so die Abhängigkeit der Verriegelungsvorgangs von einem auslösenden Ereignis, wie etwa einem Anheben des landwirtschaftlichen Arbeitsgeräts, überwunden.

Die erfindungsgemäße Kupplungsvorrichtung wird außerdem dadurch vorteilhaft weitergebildet, dass die Verriegelungseinrichtung zumindest eine, vorzugsweise zwei schwenkbare Verriegelungsklinken umfasst. Die zwei Verriegelungsklinken sind vorzugsweise voneinander beabstandet angeordnet, wobei die zwei Verriegelungsklinken eine im Wesentlichen identische Grundform aufweisen. Alternativ oder zusätzlich umfasst die Sicherungseinrichtung zumindest eine, vorzugsweise zwei schwenkbare Sicherungsklinken. Die zwei Sicherungsklinken sind vorzugsweise voneinander beabstandet angeordnet, wobei die zwei Sicherungsklinken eine im Wesentlichen identische Grundform aufweisen. Die Schwenkachse der zwei Verriegelungsklinken und die Schwenkachse der zwei Sicherungsklinken sind vorzugsweise beabstandet voneinander angeordnet und verlaufen im Wesentlichen parallel zueinander.

Das Verriegelungssystem weist vorzugsweise eine Aufnahmeeinrichtung für das Koppelelement auf, wobei die Aufnahmeeinrichtung fest an dem Maschinenrahmen befestigt ist und/oder eine Führungskulisse für das Koppelelement aufweist. Die Aufnahmeeinrichtung weist vorzugsweise zwei voneinander beabstandete und/oder im Wesentlichen identisch ausgebildete flache Aufnahmekörper auf. Die Führungskulisse erstreckt sich über einen Abschnitt des Bewegungspfads des Koppelelements von der Kuppelposition in die Arbeitsposition. Ferner weist die Führungskulisse einen Anschlag auf, wobei der Anschlag der Führungskulisse die Bewegung des Koppelelements in die der Zugmaschinen abgewandten Richtung begrenzt. Insbesondere befindet sich das Koppelelement in einer Zwischenposition, wenn das Koppelelement an dem Anschlag der Führungskulisse anliegt. Vorzugsweise weist die Verriegelungseinrichtung ebenfalls einen Anschlag auf, wobei der Anschlag der Verriegelungseinrichtung die Bewegung des Koppelelements in Richtung der Zugmaschine begrenzt. Insbesondere befindet sich das Koppelelement in der Arbeitsposition, wenn das Koppelelement an dem Anschlag der Verriegelungseinrichtung anliegt.

In einer anderen bevorzugten Ausführungsform der erfindungsgemäßen Kupplungsvorrichtung umfasst das Verriegelungssystem ein Betätigungselement, mittels welchem die Sicherungseinrichtung zwischen der Passivposition und der Sicherungsposition bewegbar ist. Das Betätigungselement kann manuell betätigbar sein und vorzugsweise einen manuell betätigbaren Betätigungshebel aufweisen. Alternativ oder zusätzlich kann das Betätigungselement einen oder mehrere elektrisch, hydraulisch oder pneumatisch angetriebene Aktuatoren umfassen, mittels welchen die Sicherungseinrichtung zwischen der Passivposition und der Sicherungsposition bewegbar ist. Beispielsweise kann ein elektrischer Aktuator als Linear-Motor ausgebildet sein.

In einer vorteilhaften Weiterbildung der erfindungsgemäßen Kupplungsvorrichtung weist das Verriegelungssystem eine Anzeige auf, welche den Zustand der Sicherungseinrichtung oder des Verriegelungssystems anzeigt. Beispielsweise umfasst die Anzeige optisch wahrnehmbare Zeichen, mittels welchen aus der Stellung eines Betätigungshebels der aktuelle Zustand der Sicherungseinrichtung oder des Verriegelungssystems ableitbar ist. Alternativ oder zusätzlich kann der Zustand der Sicherungseinrichtung oder des Verriegelungssystems durch eine geeignete Sensorik erfasst werden und dem Führer der Zugmaschine angezeigt werden, beispielsweise mittels eines Displays.

Erfindungsgemäß ist die Sicherungseinrichtung mit einer Abstellvorrichtung des landwirtschaftlichen Arbeitsgeräts gekoppelt. Landwirtschaftliche Arbeitsgeräte weisen häufig eine Abstellvorrichtung auf, damit das landwirtschaftliche Arbeitsgerät ohne Umkippgefahr und/oder ohne das Risiko einer Beschädigung beispielsweise auf dem Boden einer Maschinenhalle oder auf dem Feld abgestellt werden kann. Da die Abstellvorrichtung vor der Nutzung des landwirtschaftlichen Arbeitsgeräts stets von einem Abstellzustand in einen Arbeitszustand überführt werden muss, bietet sich eine solche Kopplung in besonderer Weise an, da die Sicherungseinrichtung vor der Nutzung des landwirtschaftlichen Arbeitsgeräts ebenfalls eine Zustandsänderung erfahren muss, nämlich ist die Sicherungseinrichtung von der Passivposition in die Sicherungsposition zu verfahren. Durch ein Verknüpfen dieser Vorgänge wird der Kuppelprozess weiter beschleunigt und vereinfacht.

Erfindungsgemäß ist vorgesehen, dass die Abstellvorrichtung zumindest eine Abstellstütze aufweist und die Sicherungseinrichtung derart mit der Abstellvorrichtung gekoppelt ist, dass bei einem Bewegen der Abstellstütze von einer Abstellposition in eine Arbeitsposition die Sicherungseinrichtung von der Passivposition in die Sicherungsposition bewegt wird. Die Abstellstütze befindet sich in der Abstellposition vorzugsweise in einem ausgefahrenen Zustand, sodass der Stand des landwirtschaftlichen Arbeitsgeräts stabilisiert wird. In der Arbeitsposition befindet sich die Abstellstütze vorzugsweise in einem eingefahrenen Zustand, wodurch ein ausreichend großer Freiraum unterhalb des landwirtschaftlichen Arbeitsgeräts zum ordnungsgemäßen und sicheren Betrieb des landwirtschaftlichen Arbeitsgeräts bereitgestellt wird. In dem eingefahrenen Zustand der Abstellstütze ist außerdem das Risiko, dass Pflanzenbestandteile sich in dem landwirtschaftlichen Arbeitsgerät verfangen, reduziert. Wenn das landwirtschaftliche Arbeitsgerät als Pflanzenschutzspritze ausgebildet ist, wird durch das Einfahren der Abstellstütze ferner vermieden, dass die Abstellstütze in den Spritzkegel einer oder mehrerer Düsen hineinragt. Zusätzlich ergibt sich eine verbesserte Gewichtsverteilung während der Nutzung des landwirtschaftlichen Arbeitsgeräts.

Erfindungsgemäß ist die Sicherungseinrichtung über einen oder mehrere Hebel mechanisch mit der Abstellvorrichtung verbunden. Insbesondere bewirkt eine Bewegung der Abstellstütze der Abstellvorrichtung oder die Bewegung eines mit der Abstellstütze verbundenen Bauteils eine Bewegung des einen oder der mehreren Hebel. Insbesondere bewirken die Hebel zumindest eine Umformung der Bewegungsart, sodass beispielsweise eine Linearbewegung in eine Rotationsbewegung umgeformt wird, sodass die Sicherungseinrichtung zur Umsetzung einer Schwenkbewegung von der Passivposition in die Sicherungsposition diese Rotationsbewegung aufnehmen kann.

Darüber hinaus ist eine erfindungsgemäße Kupplungsvorrichtung bevorzugt, bei welcher die Verriegelungseinrichtung beim Bewegen des Koppelelements von der Kuppelposition in die Arbeitsposition temporär in eine Freigabeposition verbracht wird, in welcher die Verriegelungseinrichtung den Bewegungspfad für das Koppelelement von der Kuppelposition und die Arbeitsposition freigibt. Wenn das landwirtschaftliche Arbeitsgerät abgestellt ist, kann das Koppelelement beispielsweise durch ein Rückwärtsfahren der Zugmaschine von der Kuppelposition und die Arbeitsposition bewegt werden. Vorzugsweise wird die Verriegelungseinrichtung dadurch temporär in eine Freigabeposition verbracht, dass das Koppelelement beim Bewegen von der Kuppelposition in die Arbeitsposition mit der Außenkontur der Verriegelungseinrichtung in Kontakt kommt und mit einer Auslenkkraft beaufschlagt. Aufgrund der Wirkrichtung der Auslenkkraft, welche insbesondere durch die Außenkontur der Verriegelungseinrichtung vorgegeben wird, wird die Verriegelungseinrichtung durch den Kontakt mit dem Koppelement nach oben verschwenkt.

In einer bevorzugten Ausführungsform der erfindungsgemäßen Kupplungsvorrichtung ist die Verriegelungseinrichtung durch Schwerkrafteinwirkung von der Freigabeposition in die Verriegelungsposition bewegbar. Dies wird insbesondere dadurch erreicht, dass die Verriegelungseinrichtung frei schwenkbar gelagert ist. Durch die frei schwenkbare Lagerung der Verriegelungseinrichtung fällt die Verriegelungseinrichtung automatisch nach unten, sobald das Koppelelement einen vorgegebenen Abschnitt des Bewegungspfads von der Kuppelposition zu der Arbeitsposition verlässt.

Vorteilhaft ist außerdem eine erfindungsgemäße Kupplungsvorrichtung, bei welcher das Koppelelement beim Bewegen von der Arbeitsposition in die Kuppelposition temporär in eine Zwischenposition verbracht wird, wodurch die Verriegelungseinrichtung von der Verriegelungsposition in Freigabeposition verbringbar ist. Das Verbringen der Verriegelungseinrichtung von der Verriegelungsposition in Freigabeposition ist während des Abkuppelvorgangs des landwirtschaftlichen Arbeitsgeräts notwendig. Insbesondere ist die Verriegelungseinrichtung nicht von der Verriegelungsposition in Freigabeposition verbringbar, wenn sich das Koppelelement in der Arbeitsposition befindet. Wenn das landwirtschaftliche Arbeitsgerät abgestellt ist, kann das Koppelelement beispielsweise durch ein Rückwärtsfahren der Zugmaschine in die Zwischenposition gebracht werden.

In einer anderen Ausführungsform der erfindungsgemäßen Kupplungsvorrichtung ist die Verriegelungseinrichtung zum Bewegen des Koppelelements von der Arbeitsposition zurück in die Kuppelposition zumindest temporär in der Freigabeposition zu halten. Würde die Verriegelungseinrichtung nicht in der Freigabeposition gehalten werden, würde diese sich aufgrund der Schwerkraft wieder zurück in die Verriegelungsposition bewegen, wodurch die Entkupplung des landwirtschaftlichen Arbeitsgeräts verhindert wird. Beispielsweise kann das Halten der Verriegelungseinrichtung in der Freigabeposition manuell durch den Führer der Zugmaschine, insbesondere mittels eines Seils erfolgen.

In einer besonders bevorzugten Ausführungsform der erfindungsgemäßen Kupplungsvorrichtung weist das Verriegelungssystem eine Halteeinrichtung auf, welche die Verriegelungseinrichtung selbsttätig zumindest temporär in der Freigabeposition hält, während das Koppelelement von der Arbeitsposition zurück in die Kuppelposition bewegt wird. Durch die Halteeinrichtung wird die Notwendigkeit die Verriegelungseinrichtung manuell in der Freigabeposition zu halten, überwunden, sodass auch auf Hilfsmittel, wie etwa ein Seil, verzichtet werden kann. Die Verwendung eines Seils zum Halten der Verriegelungseinrichtung bedingt ein erhebliches Beschädigungsrisiko für die Zugmaschine und das landwirtschaftliche Arbeitsgerät, da das Seil üblicherweise aus dem Führerhaus der Zugmaschine bedient wird. Im praktischen Einsatz kann sich das Seil unbemerkt vom Führer der Zugmaschine mit einem Maschinenteil verhaken. Wird das Seil unter Spannung gesetzt, können bereits bei geringen Kräften elektronische oder fluidtechnische Bauteile beschädigt werden. Dieses Beschädigungsrisiko wird durch die Halteeinrichtung eliminiert.

In einer Weiterbildung der erfindungsgemäßen Kupplungsvorrichtung umfasst die Halteeinrichtung ein vorspannbares Federelement, welches dazu eingerichtet ist, die Verriegelungseinrichtung von der Verriegelungsposition in die Freigabeposition zu bewegen, wenn sich das Koppelelement in der Zwischenposition befindet. Insbesondere befindet sich das Federelement in dem vorgespannten Zustand, bevor das Koppelelement in die Zwischenposition bewegt wird. Wenn das Koppelelement dann von der Arbeitsposition in die Zwischenposition verbracht wird, wodurch die Verriegelungseinrichtung freigegeben wird, wird mittels der Vorspannung des Federelements die Verriegelungseinrichtung von der Verriegelungsposition in die Freigabeposition selbsttätig bewegt. Vorzugsweise wird die Verriegelungseinrichtung dann von der Halteeinrichtung in der Freigabeposition gehalten.

In einer anderen Ausführungsform der erfindungsgemäßen Kupplungsvorrichtung ist das Federelement mittels eines Betätigungselements vorspannbar, mittels welchem vorzugsweise außerdem die Sicherungseinrichtung zwischen der Passivposition und der Sicherungsposition bewegbar ist. Das Betätigungselement kann manuell betätigbar sein und vorzugsweise einen manuell betätigbaren Betätigungshebel aufweisen. Alternativ oder zusätzlich kann das Betätigungselement einen oder mehrere elektrisch, hydraulisch oder pneumatisch angetriebene Aktuatoren umfassen, mittels welchen das Federelement vorspannbar ist. Beispielsweise kann ein elektrischer Aktuator als Linear-Motor ausgebildet sein.

Die erfindungsgemäße Kupplungsvorrichtung wird außerdem dadurch vorteilhaft weitergebildet, dass das Federelement mit einer Abstellvorrichtung des landwirtschaftlichen Arbeitsgeräts gekoppelt ist. Da die Abstellvorrichtung nach der Nutzung des landwirtschaftlichen Arbeitsgeräts stets von einem Arbeitszustand in einen Abstellzustand überführt werden muss, bietet sich eine solche Kopplung in besonderer Weise an, da der Zustand des Federelements ebenfalls nach der Nutzung des landwirtschaftlichen Arbeitsgeräts eine Zustandsänderung erfahren muss. Das Federelement ist nach der Nutzung des landwirtschaftlichen Arbeitsgeräts vorzuspannen, damit während des Abkuppelvorgangs die Verriegelungseinrichtung durch das Federelement von der Verriegelungsposition in die Freigabeposition bewegt werden kann. Durch ein Verknüpfen dieser Vorgänge wird der Abkuppelprozess somit weiter beschleunigt und vereinfacht.

Es ist außerdem eine erfindungsgemäße Kupplungsvorrichtung bevorzugt, bei welcher die Abstellvorrichtung zumindest eine Abstellstütze aufweist und das Federelement derart mit der Abstellvorrichtung gekoppelt ist, dass bei einem Bewegen der Abstellstütze von einer Arbeitsposition in eine Abstellposition das Federelement vorgespannt wird. Die Abstellstütze befindet sich in der Arbeitsposition vorzugsweise in einem eingefahrenen Zustand, wodurch ein ausreichend großer Freiraum unterhalb des landwirtschaftlichen Arbeitsgeräts zum ordnungsgemäßen und sicheren Betrieb des landwirtschaftlichen Arbeitsgeräts bereitgestellt wird. In dem eingefahrenen Zustand der Abstellstütze ist außerdem das Risiko, dass Pflanzenbestandteile sich in dem landwirtschaftlichen Arbeitsgerät verfangen, reduziert. Wenn das landwirtschaftliche Arbeitsgerät als Pflanzenschutzspritze ausgebildet ist, wird durch das Einfahren der Abstellstütze ferner vermieden, dass die Abstellstütze in den Spritzkegel einer oder mehrerer Düsen hineinragt. Zusätzlich ergibt sich eine verbesserte Gewichtsverteilung während der Nutzung des landwirtschaftlichen Arbeitsgeräts. In der Abstellposition befindet sich die Abstellstütze vorzugsweise in einem ausgefahrenen Zustand, sodass der Stand des landwirtschaftlichen Arbeitsgeräts stabilisiert wird.

In einer anderen Ausführungsform der erfindungsgemäßen Kupplungsvorrichtung ist das Federelement an der Verriegelungseinrichtung und an einem Hebel angelenkt. Durch die Anlenkung des Federelements an der Verriegelungseinrichtung und an dem Hebel kann durch eine Verkürzung des Abstandes der Anlenkpunkte des Federelements an der Verriegelungseinrichtung und an dem Hebel das Federelement vorgespannt werden. Dies erfolgt vorzugsweise durch das Drehen einer Welle, an welcher der Hebel befestigt ist. Wird eine weitere Drehbewegung der Welle verhindert, kann die Vorspannung des Federelements solange aufrechterhalten werden, bis die Verriegelungseinrichtung in die Zwischenposition verbracht wird und somit durch das Federelement verschwenkt werden kann.

In einer bevorzugten Weiterbildung der Kupplungsvorrichtung ist das Federelement als Gasdruckfeder ausgebildet ist. Alternativ kann das Federelement auch eine Gasdruckfeder umfassen. Gasdruckfedern weisen eine ausreichende Steifigkeit auf und sind unempfindlich gegen äußere Einflüsse. Sie eigenen sich aus diesem Grund besonders für die Verwendung mit der vorliegenden Erfindung.

Weitere Einzelheiten der Erfindung sind der Figurenbeschreibung und den Zeichnungen zu entnehmen. Es zeigen
- Fig. 1: ein Ausführungsbeispiel des erfindungsgemäßen landwirtschaftlichen Arbeitsgeräts in einer perspektivischen Darstellung;
- Fig. 2: ein Ausführungsbeispiel der erfindungsgemäßen Kupplungsvorrichtung in einem ersten Zustand in einer perspektivischen Darstellung;
- Fig. 3: die Kupplungsvorrichtung aus der Fig. 2 in einer Seitenansicht;
- Fig. 4: ein Ausführungsbeispiel der erfindungsgemäßen Kupplungsvorrichtung in einem zweiten Zustand in einer perspektivischen Darstellung;
- Fig. 5: die Kupplungsvorrichtung aus der Fig. 4 in einer Seitenansicht;
- Fig. 6: ein Ausführungsbeispiel der erfindungsgemäßen Kupplungsvorrichtung in einem dritten Zustand in einer perspektivischen Darstellung;
- Fig. 7: die Kupplungsvorrichtung aus der Fig. 6 in einer Seitenansicht;
- Fig. 8: eine Abstellvorrichtung eines erfindungsgemäßen landwirtschaftlichen Arbeitsgeräts in einer perspektivischen Darstellung;
- Fig. 9: die Abstellvorrichtung aus der Fig. 8 in einer seitlichen Schnittdarstellung;
- Fig. 10: die Abstellvorrichtung aus der Fig. 8 in einer perspektivischen Darstellung mit freigelegtem Federglied;
- Fig. 11: die Abstellvorrichtung aus der Fig. 8 in einer Seitenansicht; und
- Fig. 12: die Abstellvorrichtung aus der Fig. 8 in einer geschnittenen Draufsicht.

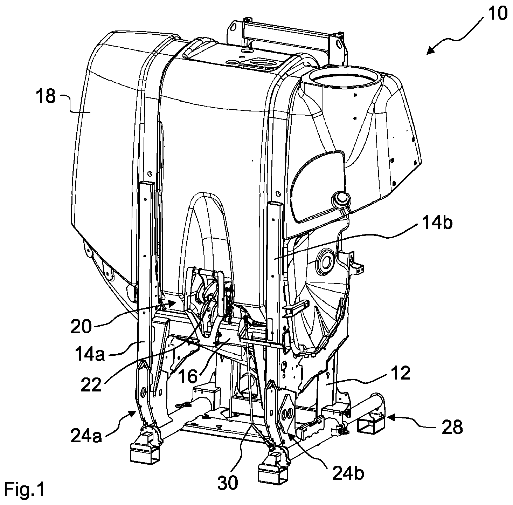

Die Fig. 1 zeigt ein landwirtschaftliches Arbeitsgerät 10, welches als Verteilergerät, nämlich als Pflanzenschutzspritze ausgebildet ist.

Das landwirtschaftliche Arbeitsgerät 10 weist einen Maschinenrahmen 12 auf, welcher eine Mehrzahl von miteinander verbundenen Streben, unter anderem zwei Vertikalstreben 14a, 14b und eine zwischen den Vertikalstreben 14a, 14b angeordnete Querstrebe 16 aufweist. An den Streben ist ein Flüssigkeitstank 18 zur Bevorratung von Pflanzenschutzmittel befestigt.

Ferner ist eine Kupplungsvorrichtung 20 mit der Querstrebe 16 verschraubt. Die Kupplungsvorrichtung 20 dient zum Ankuppeln des landwirtschaftlichen Arbeitsgeräts 10 an eine Dreipunkt-Kupplung einer Zugmaschine, wie etwa einem Traktor.

Die Kupplungsvorrichtung 20 umfasst ein Koppelelement 22, zwei untere Koppeleinrichtungen 24a, 24b und ein Verriegelungssystem 26. Das Koppelelement 22 ist als Bolzen ausgebildet und umfasst den oberen Koppelpunkt der Dreipunkt-Kupplung. Ferner ist das Koppelelement 22 zwischen einer Kuppelposition und einer Arbeitsposition bewegbar und dazu eingerichtet ist, mit einem Oberlenker einer Dreipunkt-Kupplung einer Zugmaschine gekoppelt zu werden. Der Oberlenker kann hierzu beispielsweise einen Fanghaken aufweisen. Die zwei unteren Koppeleinrichtungen 24a, 24b sind unterhalb des Koppelelements 22 angeordnet und umfassen die unteren Koppelpunkte der Dreipunkt-Kupplung. Das Verriegelungssystem 26 ist dazu eingerichtet, das Koppelelement 22 in der Arbeitsposition belastbar zu arretieren.

Das Verriegelungssystem 26 ist über eine Hebelmechanik 30 außerdem mit einer Abstellvorrichtung 28 des landwirtschaftlichen Arbeitsgeräts 10 gekoppelt.

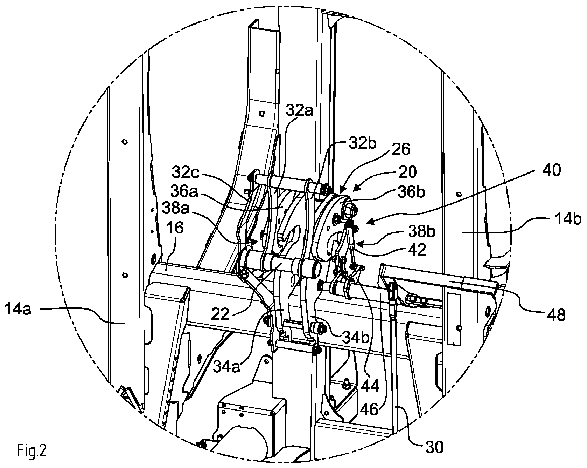

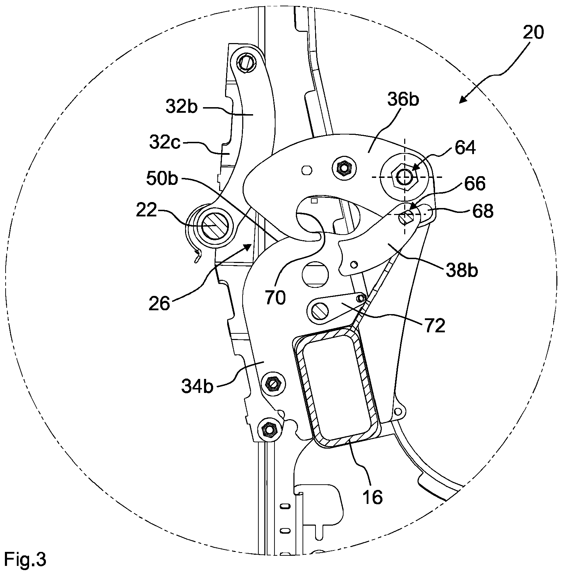

Die Fig. 2 und die Fig. 3 zeigen, dass das Koppelelement 22 schwenkbar an Schwenkhebeln 32a, 32b angelenkt ist, wobei die Schwenkhebel 32a, 32b oberhalb des Koppelelements 22 über eine Verbindungswelle mit einem weiteren Schwenkhebel 32c verbunden sind. Der Schwenkhebel 32c erstreckt von der Verbindungswelle bis unterhalb des Koppelelements 22 und ist an dem Maschinenrahmen angelenkt. Das Koppelelement 22 befindet sich in dem dargestellten Zustand der Kupplungsvorrichtung 20 in der Kuppelposition. Das Koppelelement 22 ist in Richtung des Maschinenrahmens des landwirtschaftlichen Arbeitsgeräts und somit auch in Richtung der Arbeitsposition frei bewegbar angelenkt.

Das Verriegelungssystem 26 umfasst eine Aufnahmeeinrichtung 34a, 34b, eine bewegliche Verriegelungseinrichtung 36a, 36b und eine bewegliche Sicherungseinrichtung 38a, 38b.

Die Aufnahmeeinrichtung 34a, 34b ist fest mit der Querstrebe 16 verschraubt und weist eine Führungskulisse 50a, 50b für das Koppelelement 22 auf. Die Aufnahmeeinrichtung 34a, 34b weist zwei voneinander beabstandete und im Wesentlichen identisch ausgebildete flache Aufnahmekörper 34a, 34b auf. Die Führungskulisse 50a, 50b erstreckt sich über einen Abschnitt des Bewegungspfads des Koppelelements 22 von der Kuppelposition in die Arbeitsposition.

Die Verriegelungseinrichtung 36a, 36b umfasst zwei schwenkbare Verriegelungsklinken 36a, 36b und ist zwischen einer Verriegelungsposition und einer Freigabeposition um eine Schwenkachse 64 verschwenkbar, wobei die Verriegelungseinrichtung 36a, 36b dazu eingerichtet ist, in der Verriegelungsposition die Bewegung des in der Arbeitsposition befindlichen Koppelelements 22 in Richtung der Zugmaschine zu begrenzen. In dem dargestellten Zustand der Kupplungsvorrichtung 20 befindet sich die Verriegelungseinrichtung 36a, 36b in der Verriegelungsposition. Da sich das Koppelelement 22 jedoch in der Kuppelposition befindet, wird die Bewegung des Koppelelements 22 durch die Verriegelungseinrichtung 36a, 36b nicht beschränkt.

Die Sicherungseinrichtung 38a, 38b umfasst zwei schwenkbare Sicherungsklinken und ist zwischen einer Sicherungsposition und einer Passivposition um eine Schwenkachse 66 verschwenkbar, wobei die Sicherungseinrichtung 38a, 38b dazu eingerichtet ist, in einer Sicherungsposition gemeinsam mit der in der Verriegelungsposition befindlichen Verriegelungseinrichtung 36a, 36b das Koppelelement 22 in der Arbeitsposition belastbar zu arretieren. Außerdem weist die Verriegelungseinrichtung 36a, 36b eine Ausnehmung 68 auf, durch welche sich der Schwenkbolzen der Sicherungseinrichtung 38a, 38b erstreckt. Die Innenkontur der Ausnehmung 68 dient als Anschlagsfläche und verhindert durch ein In-Kontakt-Kommen mit dem Schwenkbolzen der Sicherungseinrichtung 38a, 38b ein Verschwenken der Verriegelungseinrichtung 36a, 36b über die Verriegelungsposition hinaus. In dem dargestellten Zustand der Kupplungsvorrichtung 20 befindet sich die Sicherungseinrichtung 38a, 38b in der Passivposition.

Die Sicherungseinrichtung 38a, 38b ist manuell von der Passivposition in die Sicherungsposition verbringbar, sodass die Sicherungseinrichtung 38a, 38b grundsätzlich unabhängig von einer Bewegung des landwirtschaftlichen Arbeitsgeräts 10 von der Passivposition in die Sicherungsposition verbringbar ist.

Das Verriegelungssystem 26 umfasst ferner ein Betätigungselement 48, wobei das Betätigungselement 48 einen manuell betätigbaren Betätigungshebel aufweist.

Ferner ist angedeutet, dass die Sicherungseinrichtung 38a, 38b über eine Hebelmechanik 30 mit einer Abstellvorrichtung 28 des landwirtschaftlichen Arbeitsgeräts gekoppelt ist. Die Abstellvorrichtung 28 weist zwei Abstellstützen 52a, 52b auf, welche zum Stabilisieren des Standes des landwirtschaftlichen Arbeitsgeräts in eine Abstellposition ausgefahren werden können. Die Sicherungseinrichtung 38a, 38b ist über die Hebelmechanik 30 derart mit der Abstellvorrichtung 28 gekoppelt, dass bei einem Bewegen der Abstellstützen von der Abstellposition in eine Arbeitsposition die Sicherungseinrichtung 38a, 38b von der Passivposition in die Sicherungsposition bewegt wird.

In dem dargestellten Zustand kann der Oberlenker einer Dreipunkt-Kupplung einer Zugmaschine, beispielsweise mittels eines Fanghakens, mit dem Koppelelement 22 in der Kuppelposition in Eingriff gebracht werden.

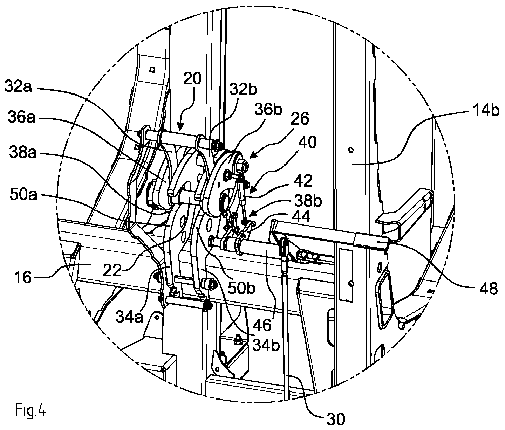

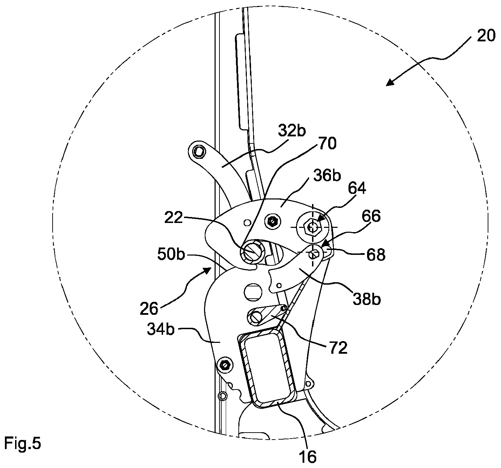

Die Fig. 4 und die Fig. 5 zeigen einen Zustand der Kupplungsvorrichtung 20, welcher durch ein Zurücksetzen der Zugmaschine erreicht wird, wenn der Oberlenker der Dreipunkt-Kupplung vor dem Zurücksetzen der Zugmaschine mit dem Koppelelement 22 in Eingriff gebracht wurde. Das Koppelelement 22 wird durch das Zurücksetzen der Zugmaschine von der Kuppelposition in die Arbeitsposition bewegt.

Die Verriegelungseinrichtung 36a, 36b wird beim Bewegen des Koppelelements 22 entlang des Bewegungspfads von der Kuppelposition in die Arbeitsposition temporär nach oben verschwenkt und somit in die Freigabeposition verbracht, in welcher die Verriegelungseinrichtung 36a, 36b den Bewegungspfad für das Koppelelement 22 von der Kuppelposition und die Arbeitsposition freigibt. Die Verriegelungseinrichtung 36a, 36b wird dadurch temporär in eine Freigabeposition verbracht, dass das Koppelelement 22 beim Bewegen von der Kuppelposition in die Arbeitsposition mit der Außenkontur der Verriegelungseinrichtung 36a, 36b in Kontakt kommt und dadurch die Verriegelungseinrichtung 36a, 36b mit einer Auslenkkraft beaufschlagt. Durch die Auslenkkraft wird die Verriegelungseinrichtung 36a, 36b um die Schwenkachse 64 nach oben verschwenkt. Nachdem das Koppelelement 22 den vorderen Klinkenabschnitt der Verriegelungseinrichtung 36a, 36b passiert hat, wird die Verriegelungseinrichtung 36a, 36b durch Schwerkrafteinwirkung wieder um die Schwenkachse 64 von der Freigabeposition zurück in die Verriegelungsposition verschwenkt. Ist die Verriegelungseinrichtung 36a, 36b durch Schwerkrafteinwirkung zurück in die Verriegelungsposition verschwenkt, kann durch erneutes Vorfahren der Zugmaschine das Koppelelement zur Anlage an die Innenkontur eines Hakenabschnitts 70 der Verriegelungseinrichtung 36a, 36b und somit endgültig in seine Arbeitsposition verbracht werden.

In dem dargestellten Zustand der Kupplungsvorrichtung 20 befindet sich die Sicherungseinrichtung 38a, 38b in der Passivposition, sodass das Koppelelement 22 zwischen dem Hakenabschnitt 70 der Verriegelungseinrichtung 36a, 36b und dem hinteren Anschlag der Führungskulissen 50a, 50b der Aufnahmeeinrichtung 34a, 34b bewegbar ist.

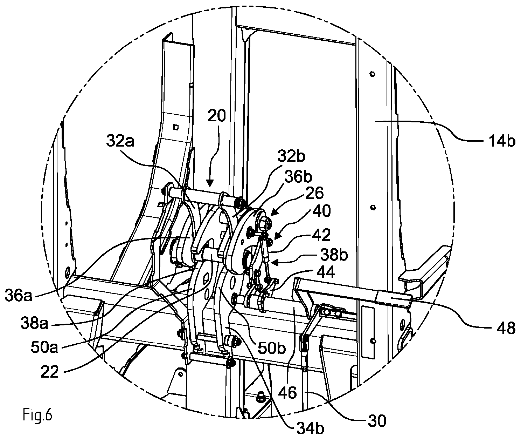

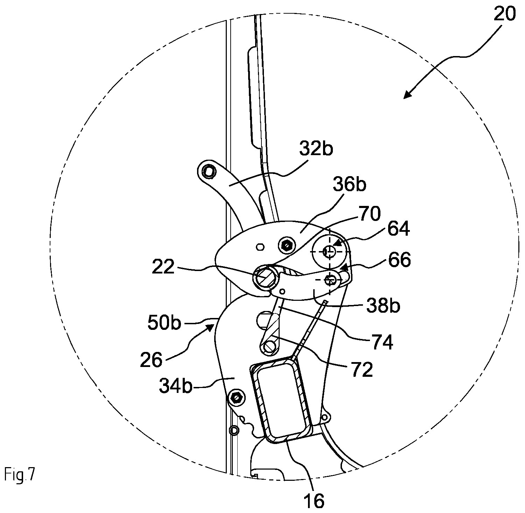

Die Fig. 6 und die Fig. 7 zeigen einen Zustand der Kupplungsvorrichtung 20, welcher durch ein Betätigen der Hebelmechanik 30 erreicht wird, wobei die Hebelmechanik 30 über Zwischenglieder 72, 74 mit der Sicherungseinrichtung 38a, 38b gekoppelt ist. Die Sicherungseinrichtung 38a, 38b ist somit unabhängig von einer Bewegung des landwirtschaftlichen Arbeitsgeräts von der Passivposition in die Sicherungsposition verbringbar.

In dem dargestellten Zustand der Kupplungsvorrichtung 20 befindet sich die Sicherungseinrichtung 38a, 38b somit in der Sicherungsposition. Die Sicherungseinrichtung 38a, 38b bewirkt in einer Sicherungsposition gemeinsam mit der in der Verriegelungsposition befindlichen Verriegelungseinrichtung 36a, 36b eine belastbare Arretierung des Koppelelements 22 in der Arbeitsposition, sodass der Kuppelvorgang abgeschlossen ist.

Zum Entkuppeln des Koppelelements 22 ist dieses wieder von der Arbeitsposition in die Kuppelposition zu verbringen. Hierzu wird das Koppelelement 22 temporär in eine Zwischenposition verbracht, nachdem die Sicherungseinrichtung 38a, 38b von der Sicherungsposition zurück in die Passivposition verschwenkt wurde. Dadurch, dass das Koppelelement 22 in eine Zwischenposition verbracht wurde, kann die Verriegelungseinrichtung 36a, 36b von der Verriegelungsposition in Freigabeposition verschwenkt werden. Das Bewegen des Koppelelements 22 in die Zwischenposition kann durch ein Rückwärtsfahren der Zugmaschine erreicht werden, wenn das landwirtschaftliche Arbeitsgerät abgestellt ist.

Zum Verschwenken der Verriegelungseinrichtung 36a, 36b von der Verriegelungsposition in Freigabeposition umfasst das Verriegelungssystem 26 eine Halteeinrichtung 40. Die Halteeinrichtung 40 umfasst ein vorspannbares Federelement 42, welches dazu eingerichtet ist, die Verriegelungseinrichtung 36a, 36b von der Verriegelungsposition in die Freigabeposition zu bewegen, wenn sich das Koppelelement 22 in der Zwischenposition befindet. Das Federelement 42 ist als Gasdruckfeder ausgebildet und über einen Hebel 44 mit einer Welle 46 verbunden. Die Vorspannung des Federelements 42 kann manuell mittels des Betätigungselements 48 erfolgen, wobei das Betätigungselement 48 mit der Welle 46 verbunden ist. In einer alternativen Ausführungsform kann das Federelement 42 auch mit einer Abstellvorrichtung des landwirtschaftlichen Arbeitsgeräts gekoppelt sein, wodurch das Vorspannen des Federelements 42 auch über die Abstellvorrichtung erfolgen kann.

Die Verriegelungseinrichtung 36a, 36b ist zum Bewegen des Koppelelements 22 von der Arbeitsposition zurück in die Kuppelposition in der Freigabeposition zu halten, damit der Bewegungspfad des Koppelelements 22 von der Arbeitsposition zurück in die Kuppelposition freigegeben ist. Die Halteeinrichtung 40 hält die Verriegelungseinrichtung 36a, 36b selbsttätig in der Freigabeposition, während das Koppelelement 22 von der Arbeitsposition zurück in die Kuppelposition bewegt wird.

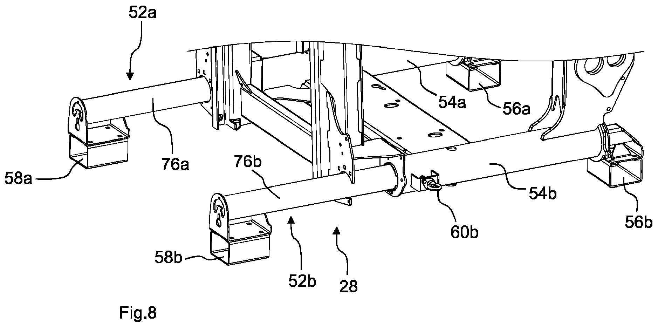

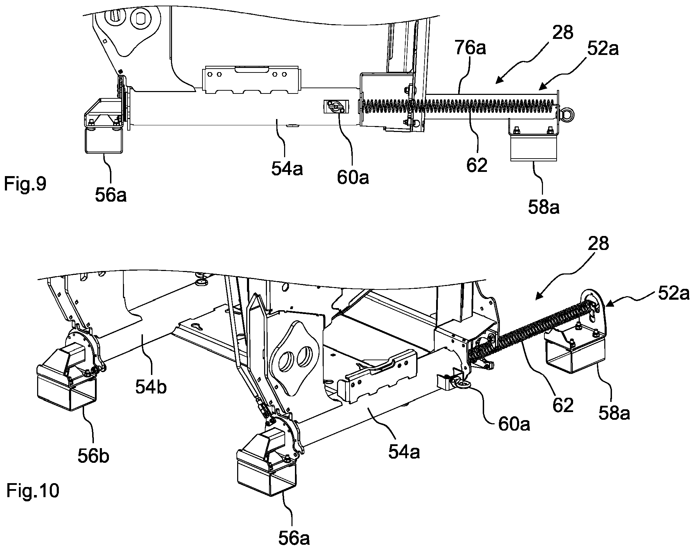

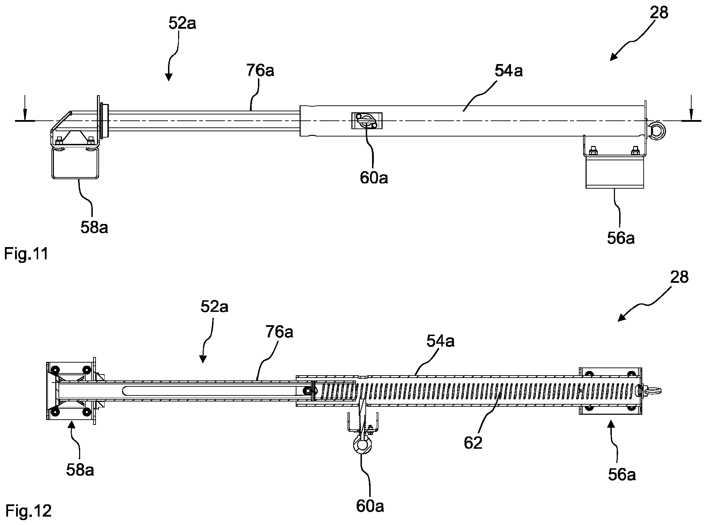

Die Fig. 8 bis 12 zeigen eine Abstellvorrichtung 28 eines landwirtschaftlichen Arbeitsgeräts. Mittels einer solchen Abstellvorrichtung 28 kann das landwirtschaftliche Arbeitsgerät ohne Umkippgefahr und/oder ohne das Risiko einer Beschädigung beispielsweise auf dem Boden einer Maschinenhalle oder auf dem Feld abgestellt werden. Hierzu können die Abstellstützen 52a, 52b von einer Abstellposition in eine Arbeitsposition ausgefahren werden.

Die Sicherungseinrichtung 38a, 38b eines Verriegelungssystem 26 einer Kupplungsvorrichtung 20 (siehe Fig. 2 bis Fig. 7) kann derart mit einer solchen Abstellvorrichtung 28 gekoppelt sein, dass bei einem Bewegen der Abstellstützen 52a, 52b von der Abstellposition in eine Arbeitsposition die Sicherungseinrichtung 38a, 38b von der Passivposition in die Sicherungsposition bewegt wird. In einer alternativen Ausführungsform kann ein Federelement 42 einer Halteeinrichtung 40 einer Kupplungsvorrichtung 20 derart mit einer solchen Abstellvorrichtung 28 gekoppelt sein, dass bei einem Bewegen der Abstellstützen 52a, 52b von einer Arbeitsposition in eine Abstellposition das Federelement 42 vorgespannt wird.

Die Abstellvorrichtung 28 weist zwei als Rohrabschnitte ausgebildete Führungselemente 54a, 54b auf, wobei die Führungselemente 54a, 54b im Wesentlichen parallel zueinander ausgerichtet und beabstandet voneinander angeordnet sind. Innerhalb der Führungselemente 54a, 54b sind die ebenfalls als Rohrabschnitte ausgebildeten Gleitelemente 76a, 76b der Abstellstützen 52a, 52b verschiebbar gelagert.

Zur Gewährleistung eines sicheren Standes und einer ausreichenden Bodenfreiheit sind an den Führungselementen 54a, 54b und an den Gleitelementen 76a, 76b Abstellfüße 56a, 56b, 58a, 58b angeordnet. Innerhalb eines Führungselements 54a, 54b und dem darin verschiebbaren Gleitelement 76a, 76b ist jeweils ein Federglied 62 angeordnet, welches als Schraubenfeder ausgebildet ist. Die Federglieder 62 werden jeweils von einem Verriegelungsbolzen 60a, 60b gesichert. Mittels der Verriegelungsbolzen 60a, 60b können die Abstellstützen 28a, 28b jeweils in der Abstellposition fixiert werden. Die Verriegelungsbolzen 60a, 60b dienen ebenfalls als Festsetzelemente, welche die Abstellstützen 28a, 28b in der Arbeitsposition fixieren.

### Bezugszeichenliste

- 10: landwirtschaftliches Arbeitsgerät
- 12: Maschinenrahmen
- 14a, 14b: Vertikalstreben
- 16: Querstrebe
- 18: Flüssigkeitstank
- 20: Kupplungsvorrichtung
- 22: Koppelelement
- 24a, 24b: untere Koppeleinrichtungen
- 26: Verriegelungssystem
- 28: Abstellvorrichtung
- 30: Hebelmechanik
- 32a, 32b, 32c: Schwenkhebel
- 34a, 34b: Aufnahmeeinrichtung
- 36a, 36b: Verriegelungseinrichtung
- 38a, 38b: Sicherungseinrichtung
- 40: Halteeinrichtung
- 42: Federelement
- 44: Hebel
- 46: Welle
- 48: Betätigungselement
- 50a, 50b: Führungskulissen
- 52a, 52b: Abstellstützen
- 54a, 54b: Führungselemente
- 56a,56b: Abstellfüße
- 58a, 58b: Abstellfüße
- 60a, 60b: Verriegelungsbolzen
- 62: Federglied
- 64: Schwenkachse
- 66: Schwenkachse
- 68: Ausnehmung
- 70: Hakenabschnitt
- 72: Zwischenglied
- 74: Zwischenglied
- 76a, 76b: Gleitelemente

## Patentansprüche

1. Landwirtschaftliches Arbeitsgerät (10), mit einer Abstellvorrichtung (28), welche zumindest eine Abstellstütze (52a, 52b) aufweist, und einer Kupplungsvorrichtung (20) zum Ankuppeln des landwirtschaftlichen Arbeitsgeräts (10) an eine Dreipunkt-Kupplung einer Zugmaschine, mit
- einem Koppelelement (22), welches zwischen einer Kuppelposition und einer Arbeitsposition bewegbar und dazu eingerichtet ist, mit einem Oberlenker einer Dreipunkt-Kupplung einer Zugmaschine gekoppelt zu werden; und
- einem Verriegelungssystem (26) mit einer beweglichen Verriegelungseinrichtung (36a, 36b), welche in einer Verriegelungsposition die Bewegung des in der Arbeitsposition befindlichen Koppelelements (22) zumindest in eine Richtung begrenzt, und einer beweglichen Sicherungseinrichtung (38a, 38b), welche in einer Sicherungsposition gemeinsam mit der in der Verriegelungsposition befindlichen Verriegelungseinrichtung (36a, 36b) das Koppelelement (22) in der Arbeitsposition belastbar arretiert;
wobei die Sicherungseinrichtung (38a, 38b) unabhängig von einer Bewegung des landwirtschaftlichen Arbeitsgeräts (10) von einer Passivposition in die Sicherungsposition verbringbar ist;
**dadurch gekennzeichnet, dass** die Sicherungseinrichtung (38a, 38b) derart über einen oder mehrere Hebel (44) mechanisch mit der Abstellvorrichtung (28) gekoppelt ist, dass bei einem Bewegen der Abstellstütze (52a, 52b) von einer Abstellposition in eine Arbeitsposition die Sicherungseinrichtung (38a, 38b) von der Passivposition in die Sicherungsposition bewegt wird.

2. Landwirtschaftliches Arbeitsgerät (10) nach Anspruch 1,
**dadurch gekennzeichnet, dass** die Sicherungseinrichtung (38a, 38b) manuell von der Passivposition in die Sicherungsposition verbringbar ist.

3. Landwirtschaftliches Arbeitsgerät (10) nach Anspruch 1 oder 2,
**dadurch gekennzeichnet, dass** die Verriegelungseinrichtung (36a, 36b) zumindest eine, vorzugsweise zwei schwenkbare Verriegelungsklinken (36a, 36b) und/oder die Sicherungseinrichtung (38a, 38b) zumindest eine, vorzugsweise zwei schwenkbare Sicherungsklinken umfasst.

4. Landwirtschaftliches Arbeitsgerät (10) nach einem der vorstehenden Ansprüche,
**dadurch gekennzeichnet, dass** das Verriegelungssystem (26) ein Betätigungselement (48) umfasst, mittels welchem die Sicherungseinrichtung (38a, 38b) zwischen der Passivposition und der Sicherungsposition bewegbar ist.

5. Landwirtschaftliches Arbeitsgerät (10) nach einem der vorstehenden Ansprüche,
**dadurch gekennzeichnet, dass** das Verriegelungssystem (26) eine Anzeige aufweist, welche den Zustand der Sicherungseinrichtung (38a, 38b) oder des Verriegelungssystems (26) anzeigt.

6. Landwirtschaftliches Arbeitsgerät (10) nach einem der vorstehenden Ansprüche,
**dadurch gekennzeichnet, dass** die Verriegelungseinrichtung (36a, 36b) beim Bewegen des Koppelelements (22) von der Kuppelposition in die Arbeitsposition temporär in eine Freigabeposition verbracht wird, in welcher die Verriegelungseinrichtung (36a, 36b) den Bewegungspfad für das Koppelelement (22) von der Kuppelposition und die Arbeitsposition freigibt.

7. Landwirtschaftliches Arbeitsgerät (10) nach Anspruch 6,
**dadurch gekennzeichnet, dass** die Verriegelungseinrichtung (36a, 36b) durch Schwerkrafteinwirkung von der Freigabeposition in die Verriegelungsposition bewegbar ist.

8. Landwirtschaftliches Arbeitsgerät (10) nach Anspruch 6 oder 7,
**dadurch gekennzeichnet, dass** das Koppelelement (22) beim Bewegen von der Arbeitsposition in die Kuppelposition temporär in eine Zwischenposition verbracht wird, wodurch die Verriegelungseinrichtung (36a, 36b) von der Verriegelungsposition in Freigabeposition verbringbar ist.

9. Landwirtschaftliches Arbeitsgerät (10) nach einem der Ansprüche 6 bis 8, **dadurch gekennzeichnet, dass** die Verriegelungseinrichtung (36a, 36b) zum Bewegen des Koppelelements (22) von der Arbeitsposition zurück in die Kuppelposition zumindest temporär in der Freigabeposition zu halten ist.

10. Landwirtschaftliches Arbeitsgerät (10) nach einem der Ansprüche 6 bis 9,
**dadurch gekennzeichnet, dass** das Verriegelungssystem (26) eine Halteeinrichtung (40) aufweist, welche die Verriegelungseinrichtung (36a, 36b) selbsttätig zumindest temporär in der Freigabeposition hält, während das Koppelelement (22) von der Arbeitsposition zurück in die Kuppelposition bewegt wird.

11. Landwirtschaftliches Arbeitsgerät (10) nach Anspruch 10,
**dadurch gekennzeichnet, dass** die Halteeinrichtung (40) ein vorspannbares Federelement (42) umfasst, welches dazu eingerichtet ist, die Verriegelungseinrichtung (36a, 36b) von der Verriegelungsposition in die Freigabeposition zu bewegen, wenn sich das Koppelelement (22) in der Zwischenposition befindet.

12. Landwirtschaftliches Arbeitsgerät (10) nach Anspruch 11,
**dadurch gekennzeichnet, dass** das Federelement (42) mittels eines Betätigungselements (48) vorspannbar ist, mittels welchem vorzugsweise außerdem die Sicherungseinrichtung (38a, 38b) zwischen der Passivposition und der Sicherungsposition bewegbar ist.

13. Landwirtschaftliches Arbeitsgerät (10) nach Anspruch 11 oder 12,
**dadurch gekennzeichnet, dass** das Federelement (42) mit der Abstellvorrichtung (28) des landwirtschaftlichen Arbeitsgeräts (10) gekoppelt ist.

14. Landwirtschaftliches Arbeitsgerät (10) nach Anspruch 13,
**dadurch gekennzeichnet, dass** das Federelement (42) über eine Hebelmechanik (30) derart mit der Abstellvorrichtung (28) gekoppelt ist, dass bei einem Bewegen der Abstellstütze (52a, 52b) von einer Arbeitsposition in eine Abstellposition das Federelement (42) vorgespannt wird.

15. Landwirtschaftliches Arbeitsgerät (10) nach einem der Ansprüche 11 bis 14,
**dadurch gekennzeichnet, dass** das Federelement (42) an der Sicherungseinrichtung (38a, 38b) und an der Verriegelungseinrichtung (36a, 36b) angelenkt ist.

16. Landwirtschaftliches Arbeitsgerät (10) nach einem der Ansprüche 11 bis 15,
**dadurch gekennzeichnet, dass** das Federelement (42) als Gasdruckfeder ausgebildet ist oder eine Gasdruckfeder umfasst.

## Claims

1. Agricultural implement (10) having a parking apparatus (28), which has at least one parking support (52a, 52b), and having a coupling apparatus (20) for coupling the agricultural implement (10) to a three-point hitch of a tractor, said coupling apparatus having
- a coupling element (22), which can be moved between a coupling position and an operating position and is intended to be coupled to an upper link of a three-point hitch of a tractor; and
- a locking system (26) with a movable locking device (36a, 36b), by means of which, in a locking position, the movement of the coupling element (22) located in the operating position is delimited at least in one direction, and with a movable securing device (38a, 38b), which in a securing position, together with the locking device (36a, 36b) located in the locking position, arrests the coupling element (22) such that it can be subjected to loading in the operating position;
wherein, irrespective of a movement of the agricultural implement (10), the securing device (38a, 38b) can be displaced from a passive position into the securing position;
**characterized in that** the securing device (38a, 38b) is coupled mechanically to the parking apparatus (28) via one or more levers (44) such that, as the parking support (52a, 52b) moves from a parking position to an operating position, the securing device (38a, 38b) is moved from the passive position into the securing position.

2. Agricultural implement (10) according to Claim 1, **characterized in that** the securing device (38a, 38b) can be displaced manually from the passive position into the securing position.

3. Agricultural implement (10) according to Claim 1 or 2,
**characterized in that** the locking device (36a, 36b) comprises at least one, preferably two pivotable locking catches (36a, 36b) and/or the securing device (38a, 38b) comprises at least one, preferably two pivotable securing catches.

4. Agricultural implement (10) according to one of the preceding claims,
**characterized in that** the locking system (26) comprises an actuating element (48), by means of which the securing device (38a, 38b) can be moved between the passive position and the securing position.

5. Agricultural implement (10) according to one of the preceding claims,
**characterized in that** the locking system (26) has a display, which displays the state of the securing device (38a, 38b) or of the locking system (26).

6. Agricultural implement (10) according to one of the preceding claims,
**characterized in that**, as the coupling element (22) moves from the coupling position into the operating position, the locking device (36a, 36b) is displaced temporarily into a release position, in which the locking device (36a, 36b) releases the movement path for the coupling element (22) from the coupling position and the operating position.

7. Agricultural implement (10) according to Claim 6, **characterized in that** the locking device (36a, 36b) can be moved from the release position into the locking position under the action of gravitational force.

8. Agricultural implement (10) according to Claim 6 or 7,
**characterized in that**, as it moves from the operating position into the coupling position, the coupling element (22) is displaced temporarily into an intermediate position, as a result of which the locking device (36a, 36b) can be displaced from the locking position into the release position.

9. Agricultural implement (10) according to one of Claims 6 to 8,
**characterized in that**, for movement of the coupling element (22) from the operating position back into the coupling position, the locking device (36a, 36b) should be retained at least temporarily in the release position.

10. Agricultural implement (10) according to one of Claims 6 to 9,
**characterized in that** the locking system (26) has a retaining device (40), which automatically retains the locking device (36a, 36b) at least temporarily in the release position while the coupling element (22) is being moved from the operating position back into the coupling position.

11. Agricultural implement (10) according to Claim 10, **characterized in that** the retaining device (40) comprises a prestressable spring element (42), which is intended to move the locking device (36a, 36b) from the locking position into the release position when the coupling element (22) is located in the intermediate position.

12. Agricultural implement (10) according to Claim 11, **characterized in that** the spring element (42) can be prestressed by means of an actuating element (48), by means of which the securing device (38a, 38b) can preferably also be moved between the passive position and the securing position.

13. Agricultural implement (10) according to Claim 11 or 12,
**characterized in that** the spring element (42) is coupled to the parking apparatus (28) of the agricultural implement (10).

14. Agricultural implement (10) according to Claim 13, **characterized in that** the spring element (42) is coupled to the parking apparatus (28) via a lever mechanism (30) such that the spring element (42) becomes prestressed as the parking support (52a, 52b) moves from an operating position into a parking position.

15. Agricultural implement (10) according to one of Claims 11 to 14,
**characterized in that** the spring element (42) is articulated on the securing device (38a, 38b) and on the locking device (36a, 36b).

16. Agricultural implement (10) according to one of Claims 11 to 15,
**characterized in that** the spring element (42) is designed in the form of a gas-pressure spring or comprises a gas-pressure spring.

## Revendications

1. Engin de travail agricole (10), comportant un dispositif de dépose (28), lequel comprend au moins un support de dépose (52a, 52b), et un dispositif d'accouplement (20) pour l'accouplement de l'engin de travail agricole (10) à un accouplement à trois points d'un tracteur, comportant
- un élément de couplage (22) qui peut être déplacé entre une position d'accouplement et une position de travail et qui est conçu pour être accouplé à un bras oscillant supérieur d'un accouplement à trois points d'un tracteur ; et
- un système de verrouillage (26) comportant un dispositif de verrouillage mobile (36a, 36b) qui, dans une position de verrouillage, limite le déplacement de l'élément de couplage (22) se trouvant dans la position de travail au moins dans une direction, et un dispositif de fixation mobile (38a, 38b) qui, dans une position de fixation, conjointement avec le dispositif de verrouillage (36a, 36b) se trouvant dans la position de verrouillage, bloque l'élément de couplage (22) dans la position de travail de manière à pouvoir être chargé ; dans lequel le dispositif de fixation (38a, 38b) peut être amené d'une position passive à la position de fixation indépendamment d'un déplacement de l'engin de travail agricole (10) ;
**caractérisé en ce que** le dispositif de fixation (38a, 38b) est accouplé mécaniquement au dispositif de dépose (28) par le biais d'un ou plusieurs leviers (44), de telle sorte que lors d'un déplacement du support de dépose (52a, 52b) d'une position de dépose à une position de travail, le dispositif de fixation (38a, 38b) est déplacé de la position passive à la position de fixation.

2. Engin de travail agricole (10) selon la revendication 1,
**caractérisé en ce que** le dispositif de fixation (38a, 38b) peut être amené manuellement de la position passive à la position de fixation.

3. Engin de travail agricole (10) selon la revendication 1 ou 2,
**caractérisé en ce que** le dispositif de verrouillage (36a, 36b) comprend au moins un, de préférence deux, cliquets de verrouillage pivotants (36a, 36b) et/ou le dispositif de fixation (38a, 38b) comprend au moins un, de préférence deux, cliquets de fixation pivotants.

4. Engin de travail agricole (10) selon l'une quelconque des revendications précédentes,
**caractérisé en ce que** le système de verrouillage (26) comprend un élément d'actionnement (48) au moyen duquel le dispositif de fixation (38a, 38b) peut être déplacé entre la position passive et la position de fixation.

5. Engin de travail agricole (10) selon l'une quelconque des revendications précédentes,
**caractérisé en ce que** le système de verrouillage (26) présente un affichage, lequel indique l'état du dispositif de fixation (38a, 38b) ou du système de verrouillage (26).

6. Engin de travail agricole (10) selon l'une quelconque des revendications précédentes,
**caractérisé en ce que** le dispositif de verrouillage (36a, 36b), lors du déplacement de l'élément de couplage (22) de la position d'accouplement à la position de travail, est amené temporairement dans une position de libération dans laquelle le dispositif de verrouillage (36a, 36b) libère la voie de déplacement pour l'élément de couplage (22) de la position d'accouplement et la position de travail.

7. Engin de travail agricole (10) selon la revendication 6,
**caractérisé en ce que** le dispositif de verrouillage (36a, 36b) peut être déplacé sous l'effet de la force de pesanteur de la position de libération à la position de verrouillage.

8. Engin de travail agricole (10) selon la revendication 6 ou 7,
**caractérisé en ce que** l'élément de couplage (22), lors du déplacement de la position de travail à la position d'accouplement, est amené temporairement dans une position intermédiaire de sorte que le dispositif de verrouillage (36a, 36b) puisse être amené de la position de verrouillage à la position de libération.

9. Engin de travail agricole (10) selon l'une quelconque des revendications 6 à 8,
**caractérisé en ce que** le dispositif de verrouillage (36a, 36b), pour le déplacement de l'élément de couplage (22) de la position de travail de nouveau à la position d'accouplement, doit être maintenu au moins temporairement dans la position de libération.

10. Engin de travail agricole (10) selon l'une quelconque des revendications 6 à 9,
**caractérisé en ce que** le système de verrouillage (26) présente un dispositif de retenue (40) qui retient le dispositif de verrouillage (36a, 36b) automatiquement au moins temporairement dans la position de libération pendant que l'élément de couplage (22) est ramené de la position de travail à la position d'accouplement.

11. Engin de travail agricole (10) selon la revendication 10,
**caractérisé en ce que** le dispositif de retenue (40) comprend un élément de ressort (42) pouvant être précontraint, qui est conçu pour déplacer le dispositif de verrouillage (36a, 36b) de la position de verrouillage à la position de libération lorsque l'élément de couplage (22) se trouve dans la position intermédiaire.

12. Engin de travail agricole (10) selon la revendication 11,
**caractérisé en ce que** l'élément de ressort (42) peut être précontraint au moyen d'un élément d'actionnement (48), au moyen duquel de préférence en outre le dispositif de fixation (38a, 38b) peut être déplacé entre la position passive et la position de fixation.

13. Engin de travail agricole (10) selon la revendication 11 ou 12,
**caractérisé en ce que** l'élément de ressort (42) est accouplé au dispositif de dépose (28) de l'engin de travail agricole (10).

14. Engin de travail agricole (10) selon la revendication 13,
**caractérisé en ce que** l'élément de ressort (42) est accouplé par le biais d'un mécanisme de levier (30) au dispositif de dépose (28) de telle sorte que lors d'un déplacement du support de dépose (52a, 52b) d'une position de travail à une position de dépose, l'élément de ressort (42) est précontraint.

15. Engin de travail agricole (10) selon l'une quelconque des revendications 11 à 14,
**caractérisé en ce que** l'élément de ressort (42) est articulé sur le dispositif de fixation (38a, 38b) et sur le dispositif de verrouillage (36a, 36b).

16. Engin de travail agricole (10) selon l'une quelconque des revendications 11 à 15,
**caractérisé en ce que** l'élément de ressort (42) est réalisé sous forme de ressort de pneumatique ou comprend un ressort pneumatique.
